# EUROPEAN PATENT SPECIFICATION

(11) **EP 3 673 117 B1**
(45) Date of publication and mention of the grant of the patent: **11.08.2021**
(21) Application number: 17757549.5
(22) Date of filing: 25.08.2017
(51) Int. Cl.: E02F 9/20, E02F 9/22, B60W 20/00

(54) **A DRIVE SYSTEM AND A METHOD FOR CONTROLLING A DRIVE SYSTEM OF A WORKING MACHINE**
ANTRIEBSSYSTEM UND VERFAHREN ZUR STEUERUNG EINES ANTRIEBSSYSTEMS EINER ARBEITSMASCHINE
SYSTÈME D'ENTRAÎNEMENT ET PROCÉDÉ POUR COMMANDER UN SYSTÈME D'ENTRAÎNEMENT D'UN ENGIN DE CHANTIER

(43) Date of publication of application: 01.07.2020
(73) Proprietor: Volvo Construction Equipment AB, 631 85 Eskilstuna (SE)
(72) Inventor: UEBEL, Karl, 635 31 Kvicksund (SE)
(74) Representative: Kransell & Wennborg KB
(86) International application number: PCT/EP2017/071439
(87) International publication number: WO 2019/037869

(56) References cited:
- WO-A1-2016/151965
- US-A1- 2003 173 125
- US-A1- 2010 332 061

## Description

### TECHNICAL FIELD

The invention relates to a drive system and a method for controlling a drive system of a working machine. In particular, the method and system relates to a hybrid drive system comprising an internal combustion engine and an energy storage.

The invention is applicable on working machines within the fields of industrial construction machines or construction equipment, in particular wheel loaders. Although the invention will be described with respect to a wheel loader, the invention is not restricted to this particular machine, but may also be used in other working machines such as articulated haulers, excavators and backhoe loaders.

### BACKGROUND

In connection with transportation of heavy loads, e.g. in construction work, work machines are frequently used. A work machine may be operated with large and heavy loads in areas where there are no roads, for example for transports in connection with road or tunnel building, sand pits, mines and similar environments.

A work machine is often used in a repeated work cycle. The term "work cycle" comprises a route of the work machine (i.e. the work cycle travel path) and a movement of a work implement, such as a bucket, (lifting/lowering operation). The work cycle is repeated in the same geographical area. During the performance of the work cycle, the work machine often encounters different gradients of the ground (uphill and downhill), and turns (cornering).

To improve the fuel efficiency of the working machine, a hybrid drive system comprising an energy storage can be used. For example, a hydraulic hybrid system consists of a pump/motor attached to the gearbox and hydraulic system based on hydraulic accumulators and control valves. The energy storage system can be charged when excess energy is available, for example during braking by producing the braking torque with the pump/motor and charging the accumulator with pressurized oil. The energy can then later on be reused.

The typical wheel loader operation includes simultaneous operation with the two main subsystems of the motion system - driveline and work hydraulics. Since both systems are directly coupled to the engine shaft the interaction of the systems can be problematic. When improving one subsystem the other might be negatively affected, for instance driving the bucket harder into a gravel pile makes it more difficult to lift. By introducing an add-on Energy Storage System (ESS) to the driveline the complete motion system must be considered in the control strategy.

US2010/0332061 discloses a method and a system for controlling a working machine comprising an energy storage. In particular, US2010/0332061 described a control strategy for a working machine during operation in a repeated work cycle, where the transfer of energy from the energy storage is adapted for characteristics of the work cycle.

However, it is desirable to further improve the efficiency of a hybrid drive system.

### SUMMARY

An object of the invention is to provide a method and a system for controlling a hybrid drive system in a working machine, where the drive system comprises a torque converter operatively coupled between the combustion engine and the gearbox.

The object is achieved by a method according to claim 1.

According to a first aspect of the invention, there is provided a method for controlling a hybrid drive system in a working machine. The system comprises an internal combustion engine; a torque converter having an input shaft operatively coupled to the engine and an output shaft operatively coupled to a gearbox; an energy storage system coupled to the gearbox for providing power to a drive shaft of the vehicle via the gearbox, the drive shaft being operatively coupled to propulsion means of the working machine; and work hydraulics operatively connected to the engine. The method comprises determining a requested power for vehicle propulsion; determining an available amount of energy in the energy storage system. The method further comprises, determining, based on a predetermined amount of energy to be provided from the energy storage system for vehicle propulsion, a torque converter slip and determining an engine speed based on the torque converter slip such that the power provided by the engine combined with the power provided the energy storage system equals the requested power for vehicle propulsion. By the provision of a method which comprises determining an engine speed based on a torque converter slip, the energy storage system can be efficiently utilized, which in turn improves the fuel efficiency of the working machine. The total amount of energy generated by the internal combustion engine can in in the present system be divided into three general parts: combustion engine losses, mechanical energy to work hydraulics and mechanical energy to the torque converter. The present disclosure is aimed at reducing the losses occurring in the torque converter and to improve the overall fuel efficiency of the working machine. Energy losses in the torque converter are proportional to the torque converter slip, i.e. the difference in rotational speed of the input shaft and output shaft of the torque converter. Accordingly, it is desirable to minimize the power provided from the combustion engine for vehicle propulsion during operations where a high torque converter slip is required.

The present invention is based on the realization that based on known properties of the energy storage system, the engine speed can be determined based on the amount of energy to be provided from the energy storage system for vehicle propulsion. Thereby, by further determining the current torque converter slip, the engine speed, i.e. engine rpm, can be minimized so that only the minimum required power is provided from the engine via the torque converter. Accordingly, torque converter losses are minimized and the fuel efficiency is improved by means of the energy storage and the described control method.

According to one embodiment of the invention, the predetermined amount of energy to be provided from the energy storage system may be the maximum available energy in the energy storage system. Hereby, the energy storage system is utilized as much as possible for reducing the required power from the engine, thereby reducing the engine speed. However, the predetermined amount of energy to be provided from the energy storage may equally well be a predetermined portion of the total available energy, such as 50%, 70% or 90% of the total available energy. However, the predetermined amount of energy may in principle be set arbitrarily. It should be noted that the amount of energy provided from the energy storage system in principle is proportional to the increase in fuel efficiency for high torque converter slip, thereby making it desirable to provide as much required energy as possible from the energy storage during operations with high torque converter slip.

According to one embodiment of the invention, the predetermined amount of energy to be provided from the energy storage system may advantageously correspond to a constant power for a predetermined period of time. In a first work cycle example, a wheel loader typically drives into a heap of material, lifts the bucket, reverses out of the heap, turns and is forwarded towards a dump truck where it unloads the material onto the container of the dump truck. After unloading, the wheel loader returns to the starting position. The work cycle can thereby be considered to comprise several actions. Moreover, the different actions of a work cycle can be predicted, for example based on previous work cycles. The action where the working machine drives into a heap of material, which may be referred to as a bucket fill action, is an action where a high torque is typically required for vehicle propulsion. Accordingly, a high torque converter slip can be expected and it is thereby desirable to provide power for vehicle propulsion from the energy storage system during the bucket fill action. With knowledge of the work cycle, and with knowledge of the characteristics of the bucket fill action in particular, the predetermined period of time for which the constant power is provided can be matched to the time required for performing the bucket fill action so that energy from the energy storage can be provided throughout the entire action. This has the advantage that an even power distribution is achieved during bucket fill and that no sudden changes in engine speed are required.

According to one embodiment of the invention, the predetermined amount of energy to be provided from the energy storage system may be varied over time according to a predetermined function. Hereby, the energy provided by the energy storage system can be adapted to any desirable action in a work cycle. An action may for example require a non-linear power supply for vehicle propulsion over the duration of the action, in which case the energy from the energy storage system can be determined by a non-linear function.

According to one embodiment of the invention, the method may further comprise determining a required hydraulic fluid flow and a required output torque for the work hydraulics, and determining a minimum required engine speed of the internal combustion engine for providing the required hydraulic fluid flow and the required output torque to the work hydraulics. Hereby, the engine speed is not reduced below the point where it can no longer provide the required power for the work hydraulics, even if the available energy in the energy storage is sufficient to provide additional power for vehicle propulsion. According to one embodiment of the invention, determining an engine speed may comprise determining an engine speed which is higher than or equal to a predetermined engine speed. Accordingly, a lower threshold may be set for the engine speed. The lower threshold may for example be set so that that engine does not stall and/or so that there is sufficient power for other vehicle functions such as the work hydraulics. Accordingly, a lower threshold for the engine speed can be set to ensure that the work hydraulics can operate without having to increase the engine speed.

According to one embodiment of the invention, the torque converter slip may determined as a difference between a rotational speed of the input shaft of the torque converter and a rotational speed of the output shaft of the torque converter. Hereby, the torque converter slip can be precisely determined by measuring the rotational speeds of the shafts connected to the torque converter.

According to one embodiment of the invention, the method may further comprise determining the torque converter slip based on an engine speed, a current gear setting of the gearbox and a rotational speed of the drive shaft. Hereby, the torque converter slip can be determined based on known properties of the torque converter without having to measure directly on the shafts connected to the torque converter. The described parameters are typically already measured and controlled in the vehicle, thereby making it possible to determine the torque converter slip without having to modify the torque converter or other parts of the drive system.

According to one embodiment of the invention the energy storage system may advantageously be a hydraulic energy storage system comprising a two quadrant hydraulic machine, at least one hydraulic accumulator connected to the hydraulic machine and a valve arrangement connecting the at least one hydraulic accumulator to the hydraulic machine. The method may further comprise controlling the valve arrangement to achieve four quadrant operation of the two quadrant hydraulic machine. Hereby, a two-quadrant pump, which is less complicated and less costly, is used together with a valve arrangement to achieve four quadrant operation. This means that the hydraulic system can recuperate energy by producing a braking torque with the hydraulic machine while charging the accumulator with pressurized hydraulic fluid. It is of course also possible to use a four quadrant hydraulic machine, eliminating the need for the above described valve arrangement.

The energy storage system may advantageously be an electric energy storage system, for example comprising an electrical machine and an energy storage such as a battery. An electrical energy storage system may for example provide a higher efficiency, and an electrical energy storage system may also more easily be adapted to store a larger amount of energy. The energy storage system may also comprise a mechanical flywheel. A mechanical flywheel would in turn require a variable speed/torque conversion device between the flywheel and the gearbox.

According to one embodiment of the invention, the method may further comprise, if the energy storage system is capable of providing energy corresponding to the requested power for vehicle propulsion, providing power from the energy storage system to the drive shaft, via the gearbox, corresponding to the requested power for vehicle propulsion. Hereby, no energy is required from the engine and the torque converter does not have to operate in a mode where a high torque converter slip leads to torque converter losses.

According to a second aspect of the invention, the object is achieved by a drive system for a working machine according to claim 11.

The drive system comprises an internal combustion engine a torque converter having an input shaft operatively coupled to the engine and an output shaft operatively coupled to a gearbox; an energy storage system coupled to the gearbox for providing power to a drive shaft of the vehicle via the gearbox, the drive shaft being operatively coupled to propulsion means of the working machine; and work hydraulics operatively connected to the engine; and a drive system control unit. The drive system control unit is configured to: determine a requested power for vehicle propulsion; determine an available amount of energy in the energy storage system. The drive system control unit is further configured to: based on a predetermined amount of energy to be provided from the energy storage system for vehicle propulsion, determine a torque converter slip and determine an engine speed based on the torque converter slip such that the power provided by the engine combined with the power provided by the energy storage system equals the requested power for vehicle propulsion.

Effects and features of this second aspect of the present invention are largely analogous to those described above in connection with the first aspect of the invention.

Further advantages and advantageous features of the invention are disclosed in the following description and in the dependent claims.

### BRIEF DESCRIPTION OF THE DRAWINGS

With reference to the appended drawings, below follows a more detailed description of embodiments of the invention cited as examples.

In the drawings:
Fig. 1 is a schematic illustration of a wheel loader comprising a drive system according to an embodiment of the invention,
Fig. 2 is a flow chart outlining the general steps of a method according to an embodiment of the invention,
Fig. 3 is a schematic illustration of a drive system according to an embodiment of the invention,
Fig. 4 comprises graphs illustrating features of a method and a system according to embodiment of the invention,
Fig. 5 comprises graphs illustrating features of a method and a system according to embodiment of the invention; and
Fig. 6 schematically illustrates features of a method and a system according to embodiment of the invention.

### DETAILED DESCRIPTION OF EXAMPLE EMBODIMENTS OF THE INVENTION

In the present detailed description, various embodiments of a hybrid drive system and a method for controlling a drive system according to the present invention are mainly discussed with reference to a hydraulic hybrid drive system in a wheel loader. It should be noted that this by no means limits the scope of the present invention which is equally applicable to electric hybrid drive systems, and that the invention also may be applicable for other types of working machines.

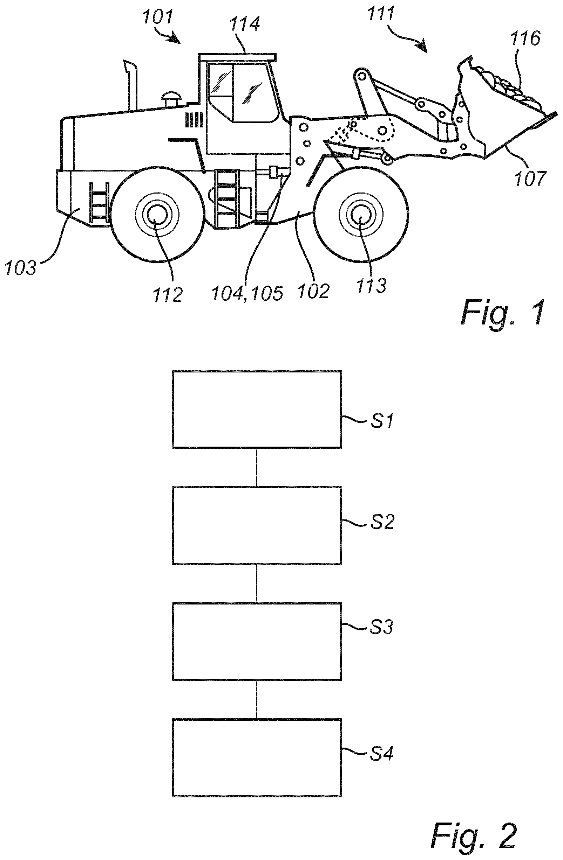

FIG. 1 shows a frame-steered working machine in the form of a wheel loader 101. The body of the wheel loader 101 comprises a front body section 102 and a rear body section 103, which sections each has an axle 112,113 for driving a pair of wheels. The rear body-section 103 comprises a cab 114. The body sections 102,103 are connected to each other in such a way that they can pivot in relation to each other around a vertical axis by means of two first actuators in the form of hydraulic cylinders 104,105 arranged between the two sections. The hydraulic cylinders 104,105 are thus arranged one on each side of a horizontal centerline of the vehicle in a vehicle traveling direction in order to tum the wheel loader 101.

The wheel loader 101 comprises an equipment 111 for handling objects or material. The equipment 111 comprises a load-arm unit 106, also referred to as a linkage, and an implement 107 in the form of a bucket fitted on the load-arm unit 106. A first end of the load-arm unit 106 is pivotally connected to the front vehicle section 102. The implement 107 is pivotally connected to a second end of the load-arm unit 106.

The load-arm unit 106 can be raised and lowered relative to the front section 102 of the vehicle by means of two second actuators in the form of two hydraulic cylinders 108, 109, each of which is connected at one end to the front vehicle section 102 and at the other end to the load-arm unit 106. The bucket 107 can be tilted relative to the load-arm unit 106 by means of a third actuator in the form of a hydraulic cylinder 110, which is connected at one end to the front vehicle section 102 and at the other end to the bucket 107 via a link-arm system 115.

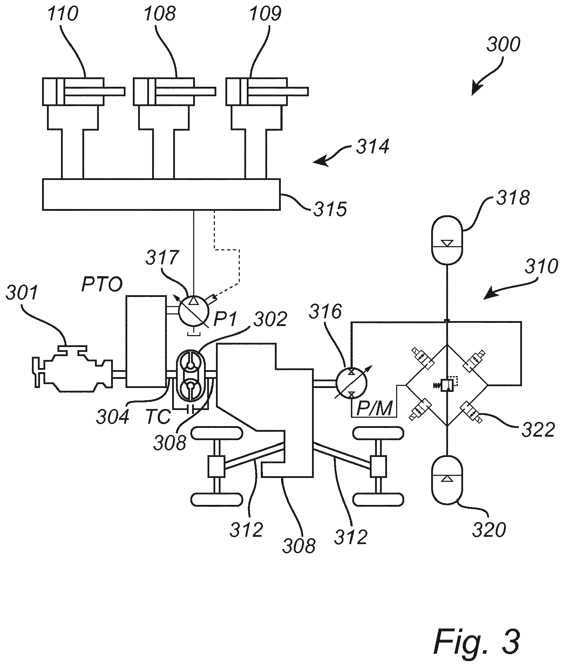

Fig. 2 is a flow chart outlining the steps of a method according to a method of the invention. The method will be described with further reference to the drive system 300 illustrated in Fig. 3.

The drive system 300 illustrated in Fig. 3 comprises an internal combustion engine 301 a torque converter 302 having an input shaft 304 operatively coupled to the engine 300 and an output shaft 306 operatively coupled to a gearbox 308. The illustrated drive system 300 can be referred to as a hybrid hydraulic drive system 300 since it comprises a second power source in addition to the combustion engine 301. The second power source is embodied by a hydraulic energy storage system 310 coupled to the gearbox 308 for providing power to a drive shaft 312 of the vehicle via the gearbox. The drive shaft 312 is in turn coupled to the rear and forwards axles 112,113 for providing vehicle propulsion by means of the wheels of the vehicle. Accordingly, the drive shaft 312 is operatively coupled to propulsion means of the vehicle. For a wheel loader, the propulsion means consist of wheels, but for other types of working machines such as excavators, the propulsion means may be tracks or other ground engaging elements.

Moreover, a hybrid drive system according to various embodiments of the invention may be arranged in many different ways as long as the hybrid drive system comprises a torque converter and a transmission, and that the energy storage system is operatively coupled to the transmission downstream of the torque converter.

The hybrid drive system 300 further comprises work hydraulics 314 operatively connected to the engine 300. The work hydraulics comprises the two hydraulic lift cylinders 108, 109, for lifting the linkage, the hydraulic tilt cylinder 110 for tilting the bucket 107, and a hydraulic valve arrangement 315 connecting the hydraulic cylinders 108, 109, 110 to a hydraulic machine 317. The work hydraulics may also comprise the hydraulic steering cylinders 104, 105 and any other hydraulic cylinders used in the working machine 101. The hydraulic machine 317 is powered by a power take-off (PTO) 319 which is operatively coupled to the engine 301. It should be noted that the work hydraulics may be configured in many different ways as realized by the skilled person, and the described configuration merely illustrates an example configuration. It is also possible to use more than one hydraulic machine for powering the work hydraulics.

The drive system further comprises a drive system control unit (not shown). The control unit may include a microprocessor, microcontroller, programmable digital signal processor or another programmable device. The control unit may also, or instead, include an application specific integrated circuit, a programmable gate array or programmable array logic, a programmable logic device, or a digital signal processor. Where the control unit includes a programmable device such as the microprocessor, microcontroller or programmable digital signal processor mentioned above, the processor may further include computer executable code that controls operation of the programmable device.

The control unit is connected to the various described features of the drive system 300 and is configured to control drive system parameters. Moreover, the control unit may be embodied by one or more control units, where each control unit may be either a general purpose control unit or a dedicated control unit for performing a specific function.

Accordingly, the drive system control unit is configured to control the drive system 300 to perform the steps of a control method. The method for controlling the drive system 300 comprises determining S1 a requested power for vehicle propulsion. The request for vehicle propulsion may for example come from an operator by means of depressing a pedal. The pedal position is subsequently translated into a power requirement.

Next, an available amount of energy in the energy storage system 310 is determined S2. The status of the energy storage system 310 may for example be continuously monitored by an energy storage control system. Fig. 3 illustrated a hydraulic energy storage system comprising a two quadrant hydraulic machine 316, a first and a second hydraulic accumulator 318, 320 connected to the hydraulic machine 316 and a valve arrangement 322 connecting the first and second hydraulic accumulator 318, 320 to the hydraulic machine 316. Here, the first hydraulic accumulator 318 is a high pressure accumulator 318 and the second hydraulic accumulator is a low pressure accumulator 320. It is also possible to arrange a plurality of hydraulic accumulators in parallel to achieve a larger energy storage. The valve arrangement 322 is configured to achieve four quadrant operation of the two quadrant hydraulic machine 316.

For a hydraulic energy storage system 310 as illustrated in Fig. 3, the available energy is proportional to the accumulated pressure in the high pressure hydraulic accumulator 318. In an electrical energy storage system (not shown), the available energy is for example proportional to the state of charge of one or more batteries comprised in the energy storage system.

The next step comprises determining S3, based on a predetermined amount of energy to be provided from the energy storage system 310 for vehicle propulsion, a torque converter slip, and determining S4 an engine speed based on the torque converter slip such that the power provided by the engine 301 combined with the power provided by the energy storage system 310 equals the requested power for vehicle propulsion. Accordingly, the power for vehicle propulsion is the sum of the power from the energy storage system 310 and power from the combustion engine via the torque converter. The gear box 308 is thus arranged so that an output torque form the torque converter 302 is combined with an output torque of the hydraulic machine 316 to form a resulting torque on the drive shaft 312 of the vehicle.

In practice, it is often required that the engine 301 operates at or above a minimum engine speed to avoid that the engine stalls. Accordingly, in response to a requested power for vehicle propulsion, i.e. a tractive power, a minimum required engine speed can be determined, or a predetermined minimum speed can be used, and the corresponding slip of the torque converter 302 can be calculated by measuring or calculating the rotational speed downstream of the torque converter 302. The slip of the torque converter 302 corresponds to a produced torque and consequently to a power transferred from the engine 301. This theoretical power from the torque converter 302 is then compared to the demanded tractive power which is a result of the operator input (acceleration pedal). If the demanded tractive power is greater than the engine power, the energy storage system 310 is requested to provide the remaining power. If there is enough available energy in the energy storage system 310, the engine 301 is requested to operate at its minimum required engine speed. If the energy of the energy storage system 310 is not sufficient to provide the difference between the engine power at minimum speed and the requested power, the remaining power needs to be supplied by the engine 301 by increasing the engine speed.

The minimum required engine speed may be based on a flow requirement of the hydraulic machine 317 for the work hydraulics. In particular, a minimum required rotational speed of the hydraulic machine 317, which depends on size of hydraulic machine, leakage, pressure, speed, temperature and operating mode of the work hydraulics, may determine the minimum rotational speed of the engine 301.

By inverting the previously described slip model of the torque converter, a corresponding engine speed and torque can then be calculated and used as reference value for an engine controller. The engine can either be speed controlled or torque controlled. The energy storage system can be controlled, if requested, to supply as much power as possible to minimize the engine speed. The transfer of energy between the energy storage system 310 and the gearbox 308 is handled by the hydraulic machine 316, acting either as a pump or a motor, which would normally be torque or power controlled.

Moreover, the control strategy for the energy storage system is the same for both braking and driving the working machine. Accordingly, when braking, the demanded power is interpreted as a negative value and the engine speed is reduced as much as possible to avoid engine and torque converter braking. When driving, the demanded power is interpreted as a positive value and the energy storage system 310 can then then be discharged fully to minimize the torque converter slip and to improve the engine efficiency.

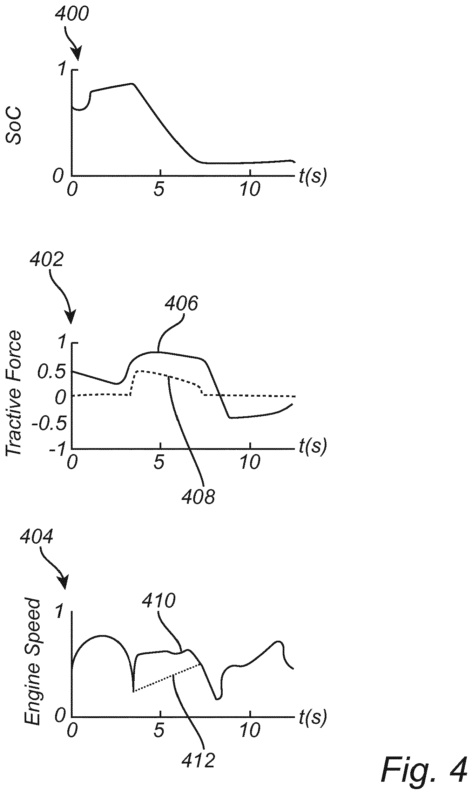

Fig. 4 comprises graphs illustrating the state of charge 400 of the energy storage system 310, tractive force 402 and engine speed 404 of the working machine 101 as a function of time during an action where the hydraulic drive system of a wheel loader comprising a hydraulic drive system 310 as described above is used. The state of charge (SoC) is normalized and the illustrated example is applicable both for a hydraulic and for an electric energy storage system. During a bucket fill action, the bucket 107 of the wheel loader 101 is being pushed into the material to be loaded, e.g. a pile of gravel. This in turn requires a high tractive force at a low vehicle speed, meaning that a high torque is required on the drive shaft 312 of the vehicle. Accordingly, the torque converter slip is high during the bucket fill action. Graph 402 illustrates the total tractive force 406 used by the working machine and the force contribution 408 from the energy storage system 310.

Moreover, graph 404 of Fig. 4 illustrates the engine speed 410 of a conventional drive system compared with the engine speed 412 of the above described hybrid drive system 300. Here, it can be seen that the engine speed 412 of the hybrid drive system 300 is lower during the bucket fill action as a result of the contribution to the vehicle propulsion from the energy storage system 310. Accordingly, the energy storage system 310 effectively reduces the fuel consumption of the working machine.

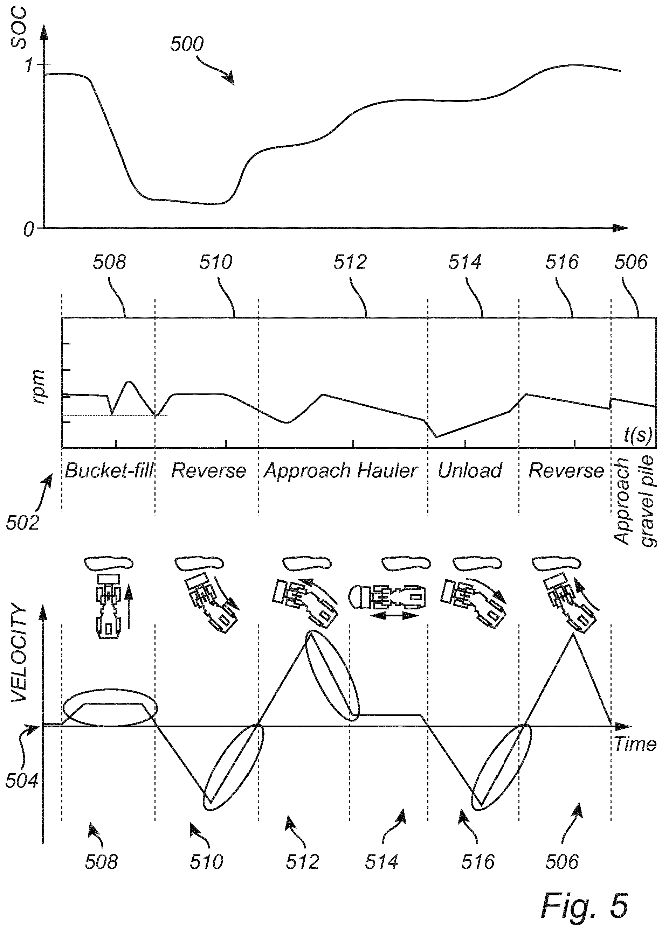

Fig. 5 comprises graphs illustrating an example work cycle of a wheel loader. Graph 500 outlines the state of charge of the energy storage system, 310, throughout an example work cycle, graph 502 illustrates the engine speed, i.e. the rpm of the combustion engine 301, and graph 504 illustrates the vehicle movement and velocity. The illustrated work cycle is a so called "short cycle loading" cycle, where the wheel loader loads material from a nearby location onto a hauler.

The work cycle of Fig. 5 comprises approaching 506 a gravel pile, filling 508 the bucket with gravel, reversing 310 the working machine to move away from the gravel pile, approaching 512 the hauler, unloading 514 the bucket into the hauler, reversing the working machine to move away from the hauler, and once again approaching 506 the gravel pile. The bucket fill action 508 comprises lowering the bucket 107 and driving the wheel loader 101 into the pile of material, thereby filling the bucket 107.

In graph 500 illustrating the state of charge, it can be seen that the energy storage system 310 is discharged during the bucket fill action as described above, and that it is primarily being charged during braking of the working machine when the working machine is braking in the approach to the hauler. In practice, charging may occur during all braking events of the work cycle, and the energy storage system may provide energy for vehicle propulsion also during other actions besides the bucket fill action.

Graph 502 of Fig. 5 further includes a minimum required engine speed during the bucket fill action 508 to ensure that sufficient flow and torque can be provided to the work hydraulics by the engine 301.

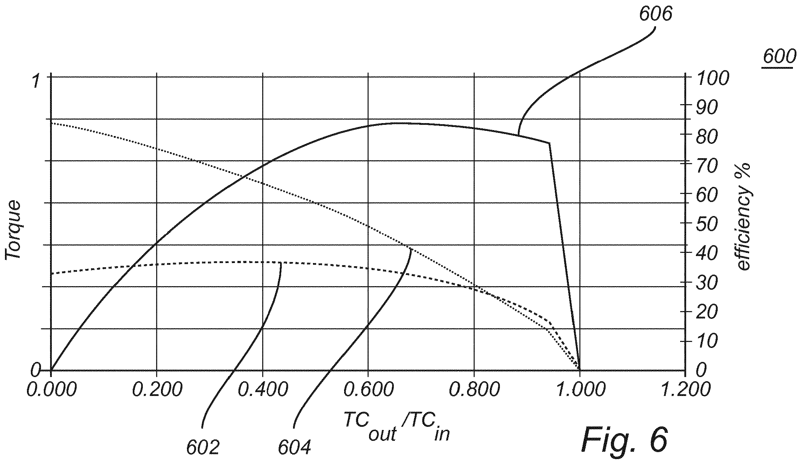

Fig. 6 is a graph 600 outlining the performance of the torque converter 320 as a function of the torque converter slip, TCₒᵤₜ/TCᵢₙ, where TCᵢₙ is the rotational speed of the input shaft 304 and TCₒᵤₜ is the rotational speed of the output shaft 306 of the torque converter. Accordingly, for TCₒᵤₜ/TCᵢₙ = 0, the output shaft of the torque converter is not moving and for TCₒᵤₜ/TCᵢₙ = 1 the input shaft 304 and output shaft 306 rotates with the same speed.

Curve 602 illustrates the torque on the input shaft 304 of the torque converter 320, which is the torque provided from the combustion engine 301. Curve 604 illustrates the output torque of the torque converter 320 and curve 606 schematically illustrates the efficiency of the torque converter 320. It can be assumed that the above described relations are known or that they can be approximated to be used in the described methods for controlling the drive system.

For a high torque converter slip, where TCₒᵤₜ/TCᵢₙ is close to zero, the output torque 604 from the torque converter at its maximum and the efficiency of the torque converter 320 is very low and it is thereby advantageous to provide power from the energy storage system to reduce energy losses in the torque converter 320 during such times that the torque converter 320 operates with low efficiency.

It is to be understood that the present invention is not limited to the embodiments described above and illustrated in the drawings; rather, the skilled person will recognize that many changes and modifications may be made within the scope of the appended claims.

## Claims

1. A method for controlling a hybrid drive system (300) in a working machine (101), the system comprising:
an internal combustion engine (301);
a torque converter (302) having an input shaft (304) operatively coupled to the engine and an output shaft (306) operatively coupled to a gearbox (308);
an energy storage system (310) coupled to the gearbox for providing power to a drive shaft (312) of the vehicle via the gearbox, said drive shaft being operatively coupled to propulsion means of the working machine; and
work hydraulics (314) operatively connected to the engine;
the method comprising:
determining (S1) a requested power for vehicle propulsion;
determining (S2) an available amount of energy in the energy storage system, the method being **characterized by**;
determining (S3), based on a predetermined amount of energy to be provided from the energy storage system for vehicle propulsion, a torque converter slip, and determining (S4) an engine speed based on the torque converter slip such that the power provided by the engine combined with the power provided by the energy storage system equals the requested power for vehicle propulsion.

2. The method according to claim 1, wherein the predetermined amount of energy to be provided from the energy storage system is the maximum available energy in the energy storage system.

3. The method according to claim 1, wherein the predetermined amount of energy to be provided from the energy storage system corresponds to a constant power for a predetermined period of time.

4. The method according to claim 1, wherein the predetermined amount of energy to be provided from the energy storage system varies over time according to a predetermined function.

5. The method according to any one of the preceding claims, further comprising determining a required hydraulic fluid flow and a required output torque for the work hydraulics, and determining a minimum required engine speed of the internal combustion engine for providing the required hydraulic fluid flow and the required output torque to the work hydraulics.

6. The method according to any one of the preceding claims, wherein determining an engine speed comprises determining an engine speed which is higher than or equal to a predetermined engine speed.

7. The method according to any one of the preceding claims, wherein the torque converter slip is determined as a difference between a rotational speed of the input shaft of the torque converter and a rotational speed of the output shaft of the torque converter.

8. The method according to any one of claims 1 to 6, further comprising determining the torque converter slip based on an engine speed, a current gear setting of the gearbox and a rotational speed of the drive shaft.

9. The method according to any one of the preceding claims, wherein the energy storage system is a hydraulic energy storage system comprising a two quadrant hydraulic machine (316), at least one hydraulic accumulator (318, 320) connected to the hydraulic machine and a valve arrangement (322) connecting the at least one hydraulic accumulator to the hydraulic machine, the method further comprising controlling the valve arrangement to achieve four quadrant operation of the two quadrant hydraulic machine.

10. The method according to any one of the preceding claims, further comprising, if the energy storage system is capable of providing power corresponding to the requested power for vehicle propulsion, providing power from the energy storage system to the drive shaft, via the gearbox, corresponding to the requested power for vehicle propulsion.

11. A hybrid drive system (300) for a working machine, the system comprising:
an internal combustion engine (301);
a torque converter (302) having an input shaft (304) operatively coupled to the engine and an output shaft (306) operatively coupled to a gearbox (308);
an energy storage system (310) coupled to the gearbox for providing power to a drive shaft (312) of the vehicle via the gearbox, said drive shaft being operatively coupled to propulsion means of the working machine; and
work hydraulics (314) operatively connected to the engine; and
a drive system control unit configured to:
determine a requested power for vehicle propulsion;
determine an available amount of energy in the energy storage system, the system being **characterized by** the drive system control unit being further configured to:
based on a predetermined amount of power to be provided from the energy storage system for vehicle propulsion, determine a torque converter slip and determine an engine speed based on the torque converter slip such that the power provided by the engine combined with the power provided by the energy storage system equals the requested power for vehicle propulsion.

12. The drive system according to claim 11, wherein the energy storage system is a hydraulic energy storage system comprising a hydraulic machine (316) and at least one hydraulic accumulator (318, 320) connected to the hydraulic machine.

13. The drive system according to claim 12, wherein the hydraulic energy storage system further comprises a valve arrangement (322) connecting the at least one hydraulic accumulator to the hydraulic machine, wherein the hydraulic machine is a two quadrant hydraulic machine, and wherein the valve arrangement is configured to achieve four quadrant operation of the two quadrant hydraulic machine.

14. The drive system according to claim 12 or 13, wherein the hydraulic energy storage system comprises a high-pressure hydraulic accumulator (318) and a low-pressure hydraulic accumulator (320).

15. A working machine comprising a drive system according to any one of claims 11 to 14.

## Patentansprüche

1. Verfahren zur Steuerung eines Hybridantriebssystems (300) in einer Arbeitsmaschine (101), das System umfassend:
ein Verbrennungsmotorsystem (301);
einen Drehmomentwandler (302) mit einer Antriebswelle (304), die operativ mit dem Motor verbunden ist, und einer Abtriebswelle (306), die operativ mit einem Getriebe (308) verbunden ist;
ein Energiespeichersystem (310), das mit dem Getriebe gekoppelt ist, um eine Antriebswelle (312) des Fahrzeugs über das Getriebe mit Energie zu versorgen, wobei die Antriebswelle operativ mit Antriebsmitteln der Arbeitsmaschine verbunden ist; und
Arbeitshydraulik (314), die operativ mit dem Motor verbunden ist;
das Verfahren, umfassend:
Bestimmen (S1) einer angeforderten Leistung für den Fahrzeugantrieb;
Bestimmen (S2) einer verfügbaren Energiemenge in dem Energiespeichersystem, wobei das Verfahren **gekennzeichnet ist durch**;
Bestimmen (S3) eines Drehmomentwandlerschlupfes auf der Grundlage einer vorgegebenen Energiemenge, die von dem Energiespeichersystem für den Fahrzeugantrieb bereitgestellt werden soll, und Bestimmen (S4) einer Motordrehzahl auf der Grundlage des Drehmomentwandlerschlupfes, so dass die von dem Motor bereitgestellte Leistung in Kombination mit der von dem Energiespeichersystem bereitgestellten Leistung der angeforderten Leistung für den Fahrzeugantrieb entspricht.

2. Verfahren nach Anspruch 1, wobei die vorgegebene Energiemenge, die aus dem Energiespeichersystem bereitgestellt werden soll, die maximal verfügbare Energie im Energiespeichersystem ist.

3. Verfahren nach Anspruch 1, wobei die vorgegebene Energiemenge, die aus dem Energiespeichersystem bereitgestellt werden soll, einer konstanten Leistung für eine vorgegebene Zeitspanne entspricht.

4. Verfahren nach Anspruch 1, wobei die vorgegebene Energiemenge, die aus dem Energiespeichersystem bereitgestellt werden soll, im Lauf der Zeit gemäß einer vorgegebenen Funktion variiert.

5. Verfahren nach einem der vorhergehenden Ansprüche, ferner umfassend das Bestimmen eines erforderlichen Hydraulikflüssigkeitsstroms und eines erforderlichen Abtriebsdrehmoments für die Arbeitshydraulik, und das Bestimmen einer minimal erforderlichen Motordrehzahl des Verbrennungsmotors, um den erforderlichen Hydraulikflüssigkeitsstrom und das erforderliche Abtriebsdrehmoment für die Arbeitshydraulik bereitzustellen.

6. Verfahren nach einem der vorhergehenden Ansprüche, wobei das Bestimmen einer Motordrehzahl das Bestimmen einer Motordrehzahl umfasst, die größer oder gleich einer vorgegebenen Motordrehzahl ist.

7. Verfahren nach einem der vorhergehenden Ansprüche, wobei der Drehmomentwandlerschlupf als Differenz zwischen einer Drehzahl der Antriebswelle des Drehmomentwandlers und einer Drehzahl der Abtriebswelle des Drehmomentwandlers bestimmt wird.

8. Verfahren nach einem der Ansprüche 1 bis 6, ferner umfassend das Bestimmen des Drehmomentwandlerschlupfes basierend auf einer Motordrehzahl, einer aktuellen Gangeinstellung des Getriebes und einer Drehzahl der Antriebswelle.

9. Verfahren nach einem der vorhergehenden Ansprüche, wobei das Energiespeichersystem ein hydraulisches Energiespeichersystem ist, das eine Zwei-Quadranten-Hydraulikmaschine (316), mindestens einen mit der Hydraulikmaschine verbundenen Hydraulikspeicher (318, 320) und eine den mindestens einen Hydraulikspeicher mit der Hydraulikmaschine verbindende Ventilanordnung (322) umfasst, wobei das Verfahren ferner das Steuern der Ventilanordnung umfasst, um einen Vier-Quadranten-Betrieb der Zwei-Quadranten-Hydraulikmaschine zu erreichen.

10. Verfahren nach einem der vorhergehenden Ansprüche, ferner umfassend, wenn das Energiespeichersystem in der Lage ist, Leistung entsprechend der angeforderten Leistung für den Fahrzeugantrieb bereitzustellen, das Bereitstellen von Leistung aus dem Energiespeichersystem an die Antriebswelle über das Getriebe, entsprechend der angeforderten Leistung für den Fahrzeugantrieb.

11. Steuerung eines Hybridantriebssystems (300) in einer Arbeitsmaschine, das System umfassend:
ein Verbrennungsmotorsystem (301);
einen Drehmomentwandler (302) mit einer Antriebswelle (304), die operativ mit dem Motor verbunden ist, und einer Abtriebswelle (306), die operativ mit einem Getriebe (308) verbunden ist;
ein Energiespeichersystem (310), das mit dem Getriebe gekoppelt ist, um eine Antriebswelle (312) des Fahrzeugs über das Getriebe mit Energie zu versorgen, wobei die Antriebswelle operativ mit Antriebsmitteln der Arbeitsmaschine verbunden ist; und Arbeitshydraulik (314), die operativ mit dem Motor verbunden ist; und
eine Steuereinheit des Antriebssystems, die konfiguriert ist, zum:
Bestimmen einer angeforderten Leistung für den Fahrzeugantrieb;
Bestimmen einer verfügbaren Energiemenge in dem Energiespeichersystem, wobei das System **dadurch gekennzeichnet ist, dass** die Steuereinheit des Antriebssystems ferner konfiguriert ist, zum:
Bestimmen eines Drehmomentwandlerschlupfes auf der Grundlage einer vorgegebenen Energiemenge, die von dem Energiespeichersystem für den Fahrzeugantrieb bereitgestellt werden soll, und Bestimmen einer Motordrehzahl auf der Grundlage des Drehmomentwandlerschlupfes, so dass die von dem Motor bereitgestellte Leistung in Kombination mit der von dem Energiespeichersystem bereitgestellten Leistung der angeforderten Leistung für den Fahrzeugantrieb entspricht.

12. Antriebssystem nach Anspruch 11, wobei das Energiespeichersystem ein hydraulisches Energiespeichersystem ist, das eine Hydraulikmaschine (316) und mindestens einen mit der Hydraulikmaschine verbundenen Hydraulikspeicher (318, 320) umfasst.

13. Antriebssystem nach Anspruch 12, wobei das hydraulische Energiespeichersystem ferner eine Ventilanordnung (322) umfasst, die den mindestens einen Hydraulikspeicher mit der Hydraulikmaschine verbindet, wobei die Hydraulikmaschine eine Zwei-Quadranten-Hydraulikmaschine ist, und wobei die Ventilanordnung konfiguriert ist, um einen Vier-Quadranten-Betrieb der Zwei-Quadranten-Hydraulikmaschine zu erreichen.

14. Antriebssystem nach Anspruch 12 oder 13, wobei das hydraulische Energiespeichersystem einen Hochdruck-Hydraulikspeicher (318) und einen Niederdruck-Hydraulikspeicher (320) umfasst.

15. Arbeitsmaschine umfassend ein Antriebssystem nach einem der Ansprüche 11-14.

## Revendications

1. Procédé de commande d'un système d'entraînement hybride (300) dans un engin de chantier (101), ce système comprenant :
un moteur à combustion interne (301) ;
un convertisseur de couple (302) doté d'un arbre d'entrée (304) couplé fonctionnellement au moteur et d'un arbre de sortie (306) couplé fonctionnellement à une boîte de vitesses (308) ;
un système de stockage d'énergie (310) couplé à la boîte de vitesses pour fournir de la puissance à un arbre moteur (312) du véhicule via la boîte de vitesse, ledit arbre moteur étant couplé fonctionnellement à un moyen de propulsion de l'engin de chantier ; et
un système hydraulique fonctionnel (314) connecté fonctionnellement au moteur ;
ce procédé comprenant :
la détermination (S1) d'une puissance requise pour la propulsion du véhicule ;
la détermination (S2) d'une quantité d'énergie disponible dans le système de stockage d'énergie, ce procédé étant **caractérisé par** :
la détermination (S3), en se basant sur une quantité prédéterminée d'énergie à fournir par le système de stockage d'énergie pour la propulsion du véhicule, d'un glissement de convertisseur de couple, et la détermination (S4) d'une vitesse de moteur en se basant sur le glissement de convertisseur de couple de manière à ce que la puissance fournie par le moteur combiné par le système de stockage d'énergie soit égale à la puissance requise pour la propulsion du véhicule.

2. Procédé selon la revendication 1, dans lequel la quantité prédéterminée d'énergie à fournir par le système de stockage d'énergie est l'énergie disponible maximale dans le système de stockage d'énergie.

3. Procédé selon la revendication 1, dans lequel la quantité prédéterminée d'énergie à fournir par le système de stockage d'énergie correspond à une puissance constante pour une durée prédéterminée.

4. Procédé selon la revendication 1, dans lequel la quantité prédéterminée d'énergie à fournir par le système de stockage d'énergie varie dans le temps suivant une fonction prédéterminée.

5. Procédé selon l'une quelconque des revendications précédentes, comprenant en outre la détermination d'un flux de fluide hydraulique requis et d'un couple de sortie requis pour le système hydraulique fonctionnel, et la détermination d'une vitesse de moteur requise minimale du moteur à combustion interne pour fournir le flux de fluide hydraulique requis et le couple de sortie requis au système hydraulique fonctionnel.

6. Procédé selon l'une quelconque des revendications précédentes, dans lequel la détermination d'une vitesse de moteur comprend la détermination d'une vitesse de moteur qui est supérieure ou égale à une vitesse de moteur prédéterminée.

7. Procédé selon l'une quelconque des revendications précédentes, dans lequel le glissement de convertisseur de couple est déterminé sous forme d'une différence entre une vitesse de rotation de l'arbre d'entrée du convertisseur de couple et une vitesse de rotation de l'arbre de sortie du convertisseur de couple.

8. Procédé selon l'une quelconque des revendications 1 à 6, comprenant en outre la détermination du glissement de convertisseur de couple en se basant sur une vitesse de moteur, un réglage de transmission de courant de la boîte de vitesse et une vitesse de rotation de l'arbre moteur.

9. Procédé selon l'une quelconque des revendications précédentes, dans lequel le système de stockage d'énergie est un système de stockage d'énergie hydraulique comprenant une machine hydraulique à deux quadrants (316), au moins un accumulateur hydraulique (318,320) connecté à la machine hydraulique et un système de soupape (322) connectant l'au moins un accumulateur hydraulique à la machine hydraulique, le procédé comprenant en outre la commande du système de soupape pour obtenir un fonctionnement à quatre quadrants de la machine hydraulique à deux quadrants.

10. Procédé selon l'une quelconque des revendications précédentes, comprenant en outre, si le système de stockage d'énergie est capable de fournir une puissance correspondant à la puissance requise pour la propulsion du véhicule, la fourniture de puissance par le système de stockage d'énergie à l'arbre moteur, via la boîte de vitesse, correspondant à la puissance requise pour la propulsion du véhicule.

11. Système d'entraînement hybride (300) pour machine de chantier, ce système comprenant :
un moteur à combustion interne (301) ;
un convertisseur de couple (302) doté d'un arbre d'entrée (304) couplé fonctionnellement au moteur et d'un arbre de sortie (306) couplé fonctionnellement à une boîte de vitesses (308) ;
un système de stockage d'énergie (310) couplé à la boîte de vitesses pour fournir de la puissance à un arbre moteur (312) du véhicule via la boîte de vitesse, ledit arbre moteur étant couplé fonctionnellement à un moyen de propulsion de l'engin de chantier ; et
un système hydraulique fonctionnel (314) connecté fonctionnellement au moteur ; et
une unité de commande de système d'entraînement conçue de pour :
déterminer une puissance requise pour la propulsion du véhicule ;
déterminer une quantité d'énergie disponible dans le système de stockage d'énergie, le système étant **caractérisé en ce que** l'unité de commande de système d'entraînement est en outre conçue pour :
en se basant sur une quantité prédéterminée de puissance à fournir par le système de stockage d'énergie pour la propulsion du véhicule, déterminer un glissement de convertisseur de couple et déterminer une vitesse de moteur en se basant sur le glissement de convertisseur de couple de manière à ce que la puissance fournie par le moteur combinée à la puissance fournie par le système de stockage d'énergie soit égale à la puissance requise pour la propulsion du véhicule.

12. Système d'entraînement selon la revendication 11, dans lequel le système de stockage d'énergie est un système de stockage d'énergie hydraulique comprenant une machine hydraulique (316) et au moins un accumulateur hydraulique (318,320) connecté à la machine hydraulique.

13. Système d'entraînement selon la revendication 12, dans lequel le système de stockage d'énergie hydraulique comprend en outre un système de soupape (322) connectant l'au moins un accumulateur hydraulique à la machine hydraulique, la machine hydraulique est une machine hydraulique à deux quadrants, et le système de soupape est conçu pour obtenir un fonctionnement à quatre quadrants de la machine hydraulique à deux quadrants.

14. Système d'entraînement selon la revendication 12 ou 13, dans lequel le système de stockage d'énergie hydraulique comprend un accumulateur hydraulique à haute pression (318) et un accumulateur hydraulique à basse pression (320).

15. Engin de chantier comprenant un système d'entraînement selon l'une quelconque des revendications 11 à 14.
